# EUROPEAN PATENT APPLICATION

(11) **EP 4 831 072 A1**
(43) Date of publication of application: **28.10.2026**
(21) Application number: 25172599.0
(22) Date of filing: 25.04.2025
(51) Int. Cl.: B65B 7/16, B65B 31/02, B65B 59/00, B29C 65/00

(54) **PACKAGING MACHINE WITH A TOOL DRUM AND CORRESPONDING METHOD**

(71) Applicant: Italianpack S.p.A., 22100 Como (CO) (IT)
(72) Inventor: FRIGERIO, Massimo Pasqui, 22070 Montano Lucino (CO) (IT); DAVIDE, Arrigo, 22075 Lurate Caccivio (CO) (IT); PETRINI, Tomaso, 22100 Como (CO) (IT)
(74) Representative: Praxi Intellectual Property Lugano

(57) **Abstract**

The present invention refers to a packaging machine (1) comprising a sealing station (4) with an upper tool part being configured as a rotatable tool drum (10) for providing selectively different kinds of thereon mounted tools (12, 13, 14, 15) for a sealing process, and the present invention further refers to a corresponding method.

## Description

The present invention refers to a packaging machine with a tool drum, according to claim 1. The present invention further refers to a method for rotating a tool drum according to independent claim 15.

FR 2 971 489 A1 discloses a packaging machine with a sealing station. The packaging machine is configured as a tray sealer, wherein the sealing station comprises a lower tool for receiving trays and an upper tool, which is configured as a tool drum with four different upper sealing tools. Depending on which packaging format is produced, i.e. which lower tool is used, the tool drum rotates the corresponding upper tool into position above the lower tool. Each upper tool which is mounted onto the tool drum comprises a fluid connector unit, which may be connected to a fluid supply, if the corresponding upper tool is brought into a working position. Thus, each upper tool, which is provided onto the tool drum comprises its own fluid connector unit, which makes the design of the upper tool parts rather complex and also leads to higher manufacturing costs of the corresponding upper tool parts.

It is the object of the present invention to provide a packaging machine with a tool drum, which can be produced and be operated in a cost efficient manner, and which allows a better compatibility with different kinds of upper tool parts at reduced costs, respectively.

This object can be solved by a packaging machine according to claim 1. Further, this object can be solved by a method for rotating a tool drum according to claim 15.

Improved embodiments of the present invention are provided by the dependent claims.

The inventive packaging machine comprises a sealing station with a tool drum. The tool drum is mounted rotatable about a rotation axis. The tool drum comprises a frame, at least a first tool part and a second tool part, wherein the first tool part and the second tool part are mounted onto the frame, and a fluid manifold. According to the invention, the sealing station comprises a fluid supply unit, which is connectable with the fluid manifold, wherein the tool drum is rotatable about the rotation axis into a first orientation angle, such that the fluid manifold is connectable to the fluid supply unit for distributing fluid to the first tool part. According to the invention, the tool drum is rotatable about the rotation axis into a second orientation angle, such that the fluid manifold is connectable to the fluid supply unit for distributing fluid to the second tool part. The inventive fluid manifold acts as a central junction or hub for distributing fluid to the upper tool parts, i.e. to multiple destinations. Depending on the orientation angle of the tool drum, the inventive fluid manifold directs the fluid either to the first upper tool part or to the second upper tool part, i.e. to all from a single point.

Therefore, at the present invention, the fluid manifold is provided as a central fluid manifold for distributing fluid to the first tool part as well as to the second tool part depending on the tool drum being in the first orientation angle or in the second orientation angle, respectively. In contrast to the prior art mentioned above, the inventive fluid manifold can be used for each of the upper tool parts being mounted onto the frame of the tool drum. In other words, there is no need to equip the several upper tools themselves each with its own fluid connector unit for being connected to a fluid supply when being moved into a working position. At the present invention, the fluid manifold can be used as a main central point for establishing a fluid connection and for distributing the fluid to the corresponding upper tool part which is in a working position.

With respect to its central function for distributing fluid to the corresponding upper tool part, the inventive fluid manifold may be structurally disposed at a central place at the tool drum such that the manifold itself may have a more robust support for a reliable connection to the fluid supply.

Also, thanks to the fluid manifold at the tool drum tubing complexity can be reduced. Further, as the fluid manifold is provided as a unit of the tool drum, this allows to reduce complexity of the thereon mounted upper tool parts which provides a great potential for manufacturing cost savings.

Preferably, the fluid manifold is mounted at an outer face of the frame. Being mounted at the outer face of the frame this enables the fluid manifold to be easily connectable with the fluid supply. In such location of the fluid manifold, it is also possible to arrange the fluid supply external to the tool drum. Ideally, the fluid manifold is mounted centrally at the outer face of the frame, preferably about the rotation axis of the tool drum. This allows a compact design of the tool drum and enables a better accessibility of the fluid manifold at a central point for a more reliable fluid connection.

According to one embodiment, the fluid manifold is provided as a unit being separated from the first tool part and the second tool part. According to this embodiment, neither the first tool part nor the second tool part carries the fluid manifold, but rather uses the fluid manifold as a main central provider of fluid if they are brought into a sealing position, respectively. This also lowers manufacturing costs of the upper tool parts as the have a reduced complex design.

Ideally, the fluid manifold is connected to a drive shaft. Being connected to a drive shaft, the fluid manifold can be brought into the first orientation angle as well as into the second orientation angle very precisely to ensure a better connectability with the fluid supply. This also enables a compact design for establishing a connection between the fluid supply and the fluid manifold.

It would be conceivable that the fluid manifold is centrally mounted at an end of the drive shaft. The fluid manifold can be mounted as a unit which connects the end of the drive shaft with the frame of the tool drum. In such configuration the fluid manifold may be centrally positioned between the drive shaft and the frame of the tool drum when seen along the rotation axis.

Preferably, the fluid manifold comprises a mounting plate, which is mounted to the frame in a rotation fixed manner. This enables a robust construction for the fluid manifold as a central provider of fluid connection to the first tool part as well as the second tool part. The mounting plate may be mounted to the frame with a predetermined distance. This renders the fluid manifold being held in a position where it is easy connectable to the fluid supply.

The mounting plate may be designed as a plate, which is connected at one side to the end of the drive shaft and at the opposite side with the frame of the tool drum. Thus, the mounting plate of the fluid manifold may be used as a robust connector between the drive shaft and the frame. Ideally, the mounting plate may be mounted such that the rotation axis of the tool drum runs through the mounting plate.

According to one embodiment, the mounting plate carries at least a first block for distributing fluid to the first tool part and a second tool block for distributing fluid to the second tool part. This leads to a compact and robust design as the mounting plate is used as a carrier for each of the first block and the second block. The first block and the second block may be arranged circumferentially at the mounting plate.

Preferably, the fluid manifold is configured to distribute compressed air, a vacuum and/or a predetermined gas to at least the first tool part and the second tool part for a sealing process. Such fluid connections can be securely achieved via the fluid manifold being separated from the first tool part and the second tool part, but rather provided as a main central fluid provider at the tool drum.

It would be conceivable that the fluid supply unit is positioned outside of the frame, i.e. at a place next to the frame of the tool drum for establishing a fluid connection together with the fluid manifold externally to the frame. This, enables the frame to be more compact. By being located outside the frame, this enables the fluid supply to be equipped with a stronger drive for establishing a fluid connection with the fluid manifold.

Preferably, the fluid supply unit comprises a fluid connector, which is movable transversely to the rotation axis between an open position, where the fluid supply unit is disconnected from the fluid manifold and a closed position, where the fluid supply unit is connected to the fluid manifold.

Ideally, the fluid supply unit comprises a stationary base with at least two linear drives for moving the fluid connector between the open position and the closed position. By the two linear drives, it is enabled to provide sufficient forces for connecting the fluid supply unit with the fluid manifold to establish a more secure connection for the fluid distribution to the corresponding upper tool part.

Preferably, the rotation axis is a horizontal rotation axis. Thus, the tool drum may rotate about a horizontal rotation axis, in order to either bring the first tool part or the second tool part above the lower tool part for the sealing process.

Ideally, the sealing station comprises at least one servomotor for rotating the tool drum, in particular, the at least one servomotor being configured for rotating the tool drum bidirectional.

It would be conceivable that the servomotor connects to the fluid manifold via a gear drive, ideally via a reduction gear, more preferably via a worm gear drive.

According to one embodiment, the tool drum comprises a current supply unit with a central current supply and a thereto connected electrical manifold for distributing the current to the first tool part and the second tool part, the electrical manifold being located inside the frame of the tool drum, and with a quick connector assembly for the first tool part and the second tool part being located outside the frame. According to such embodiment, the current supply is provided centrally inside the frame, from where electrical current is distributed to the corresponding tool parts via a quick connector assembly being located outside the frame, which renders the manual connection between the central current supply and the corresponding tool part more easy to handle.

It would be conceivable that the current supply unit is configured to provide the first upper tool part and the second upper tool part each with electricity irrespective to which of these upper tool parts is in a working position for the sealing process.

Ideally, the electrical manifold is configured as a rotor which may be controlled to rotate about the rotating axis of the tool drum. The rotor may be controlled to rotate while the tool drum maintains its orientation. Thus, the electrical manifold acts as a generator inside the tool drum to distribute from a central point electricity to the upper tool parts being mounted onto the frame.

Preferably, the packaging machine comprises at least one first RFID system based on which rotation of the tool drum is controlled. Based on the first RFID system measurement, the lower tool part can be identified, such that the tool drum may automatically rotate to bring the tool drum into a corresponding orientation angle such that the upper tool part being mounted onto the frame which fits to the lower tool part is brought into a position above the lower tool part for a sealing process.

Ideally, the packaging machine is a tray sealer, wherein the sealing station comprises at least one lower tool part which is identifiable by the first RFID system.

The present invention refers to a method for rotating a tool drum about a rotation axis between a first orientation angle and a second orientation angle, wherein in the first orientation angle a fluid manifold of the tool drum is used for distributing fluid to a first tool part being mounted onto the tool drum. According to the present invention, in the second orientation angle the fluid manifold is used for distributing fluid to a second tool part being mounted on the tool drum.

Therefore, depending on into which orientation angle the tool drum is rotated, the fluid manifold may be used for distributing either fluid to the first tool part or to the second tool part, respectively. Thus, the method uses a main central fluid manifold for each of the first tool part and the second tool part being mounted onto the tool drum.

The invention will be explained in more detail in view of embodiments as shown in the following figures. Specifically,
- Figure 1: shows a packaging machine in form of a tray sealer,
- Figure 2: shows the tray sealer of figure 1 in a cut-through perspective,
- Figure 3: shows a tool drum in isolation in a first perspective,
- Figure 4: shows the tool drum of figure 3 in another perspective,
- Figure 5: shows the frame of the tool drum without tools mounted thereon,
- Figure 6: shows the fluid manifold being fluidly disconnected with a fluid supply unit, and
- Figure 7: shows the fluid manifold being fluidly connected to the fluid supply unit.

Same technical features are referred to the same reference numerals throughout the figures.

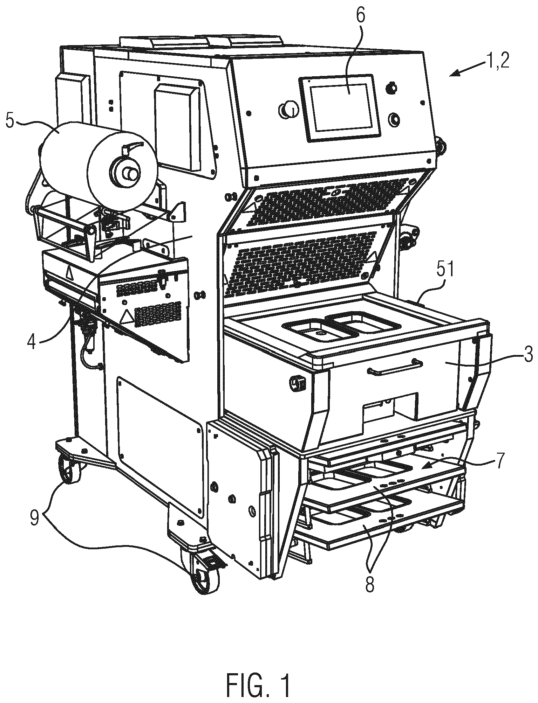

Figure 1 shows a packaging machine 1 in a perspective view. The packaging machine 1 is formed as a tray sealer 2, especially as a drawer-type tray sealer 2. The tray sealer 2 comprises a lower tool part 3 for receiving trays. According to figure 1, the lower tool part 3 is configured as a drawer tool part, which may be moved from its position shown in figure 1 into a sealing station 4 of the tray sealer 2. The sealing station 4 is configured to close the trays received in the lower tool part 3 with an upper film 5, which is transported through the sealing station 4.

Further, as shown by figure 1, the tray sealer 2 comprises a control device 6, which is formed as a touch display for an operator to set up a sealing process and observe the same.

Figure 1 shows that the tray sealer 2 comprises a tray holder storage 7. Inside the tray holder storage 7 several different tray holders 8 are stored, which may be selectively mounted as a top part of the lower tool part 3 for receiving different kinds of tray formats.

Also, figure 1 shows that the tray sealer 2 comprises an undercarriage with wheels 9 such that the tray sealer 2 can be easily moved at the production area to a desired place.

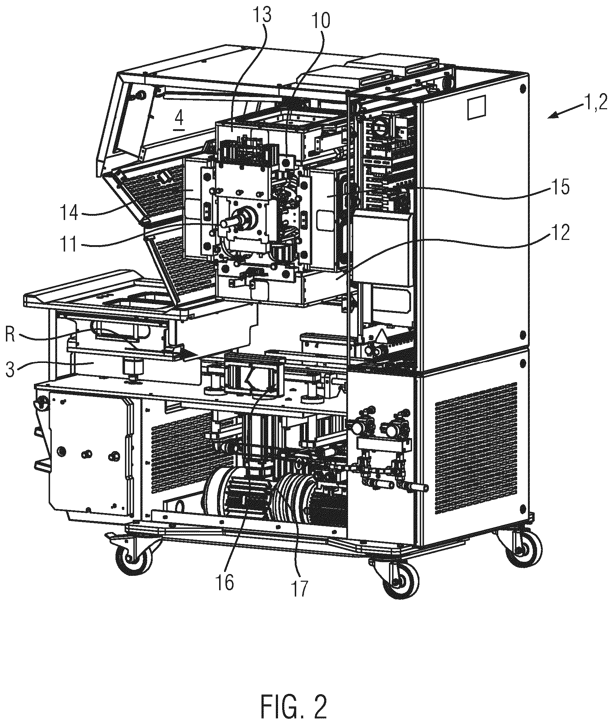

Figure 2 shows a cut through perspective of the tray sealer 2 of figure 1. As shown by figure 2, the sealing station 4 comprises a tool drum 10, which is rotatable about a rotation axis 11. The rotation axis 11 is a horizontal rotation axis running through the sealing station 4. The tool drum 10 carries a first tool part 12, a second tool part 13, a third tool part 14 and a fourth tool part 15.

According to figure 2, the first tool part 12 is rotated in order to be positioned for a sealing process. For the sealing process, the lower tool part 3 is moved in a direction R, i.e. into a position below the first tool part 12, into the sealing station 4. Figure 2 shows that the sealing station 4 comprises a lifting mechanism 16. The lower tool part 3 may be shifted from its shown position onto the lifting mechanism 16, which is configured to lift the lower tool part 3 upwards to bring it together with the first tool part 12 for the sealing process. Figure 2 also shows that the sealing station 4 comprises a pump 17 being positioned at the bottom of the sealing station 4. Such pump 17 can be used to evacuate an inner volume of the packaging to be produced.

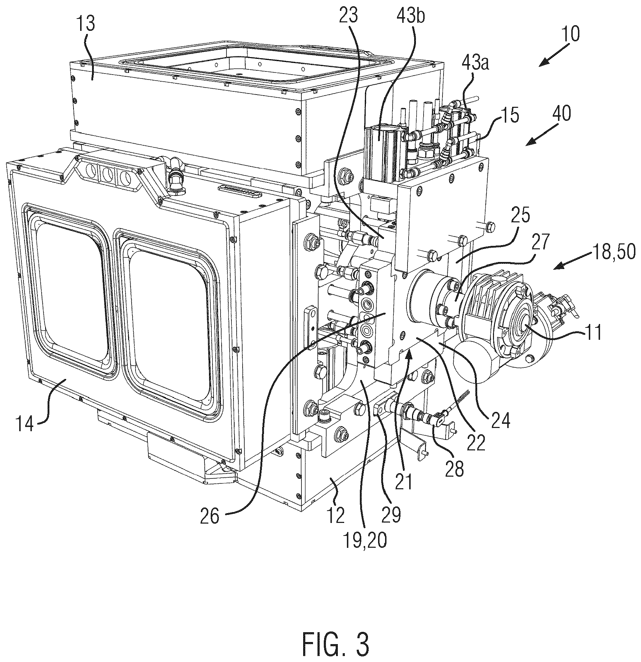

Figure 3 shows the tool drum 10 in isolation. The tool drum 10 is connected with a drum drive 18. The drum drive 18 is configured as a gear drive. Figure 3 shows that the tool drum 10 comprises a frame 19 which carries the first tool part 12, the second tool part 13, the third tool part 14, and the fourth tool part 15.

Figure 3 shows that the tool drum 10 provides at an outer face 20 of the frame 19 a fluid manifold 21. The manifold 21 comprises a mounting plate 22, which is mounted to the outer face 20 with a predetermined distance in between, and which carries a first block 23, a second block 24, a third block 25, and a second block 26.

Depending on an orientation angle into which the tool drum 10 is rotated, the first block 23, the second block 24, the third block 25, or the fourth block 26 may be connected with a fluid supply unit 40. In the orientation shown in figure 3, the fluid supply 40 may be connected with the first block 23 in order to establish a fluid connection with the first tool part 12. If the orientation of the tool drum 10 is changed by rotating the tool drum 10 about the rotation axis 11 by 180°, the fluid supply unit 40 may be connected with the second block 24 in order to provide a fluid connection to the second tool part 13.

Figure 3 also shows that the fluid manifold 21 is mounted in a rotation fixed manner to a drive shaft 27 of the gear drive 18. Figure 3 shows that the fluid manifold 21 is mounted to an end of the drive shaft 27 as a unit being located outside the frame 19 and therefore being separated from the several tool parts 12, 13, 14, 15. Thus, the fluid manifold 21 provides a central fluid distributor for the tool parts 12, 13, 14, 15.

Further, figure 3 shows a RFID reader 28. The RFID reader 28 is configured to identify an RFID 29 for detecting the corresponding tool part based on which the fluid connection can be controlled to be established, and preferably based on which the fluid distribution during the process cycle can be controlled.

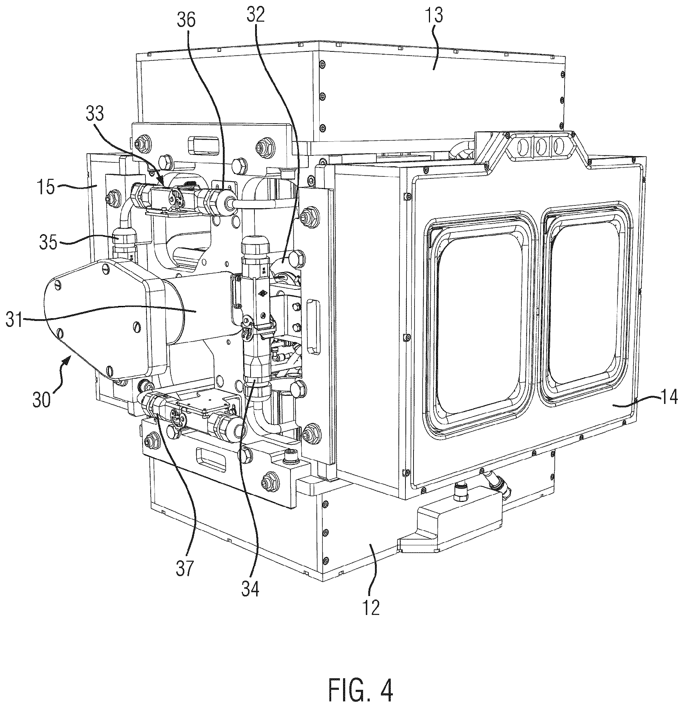

Figure 4 shows the tool drum 10 in another perspective. At an outer face of the frame 19, being opposite to the outer face 20 where the fluid manifold 21 is located, a current supply unit 30 is provided. The current supply 30 provides a central current supply 31. The central current supply 31 is connected with an electrical manifold 32, which is configured for distributing the current to the first tool part 12, the second tool part 13, the third tool part 14, as well as the fourth tool part 15. The electrical manifold 32 may be configured with a rotor to induce electrical current to the tool parts.

In addition, figure 4 shows that the electrical manifold 32 is connected from the inside of the frame 19 with the corresponding tool parts 12 to 15 by means of a quick connector assembly 33 being located at the outer face of the frame 19. The quick connector assembly 33 comprises a first quick connector 34 for providing the first tool part 12 with electrical current. Further, the quick connector assembly 33 comprises a second quick connector 35, a third quick connector 36 and a fourth quick connector 37 for providing the second tool part 13, the third tool part 14 and the fourth tool part 15 with electrical current. The provision of electrical energy to the corresponding tool parts 12 to 15 can be established by the current supply 30 regardless of which tool part 12 to 15 is moved above the lower tool part 3 for the sealing process. Thus, each of the tool parts 12 to 15 can be heated and thereby kept on a predetermined operating temperature. For example, those tool parts which are not in use can be preheated to a predetermined temperature, even if these tool parts are not in a sealing position.

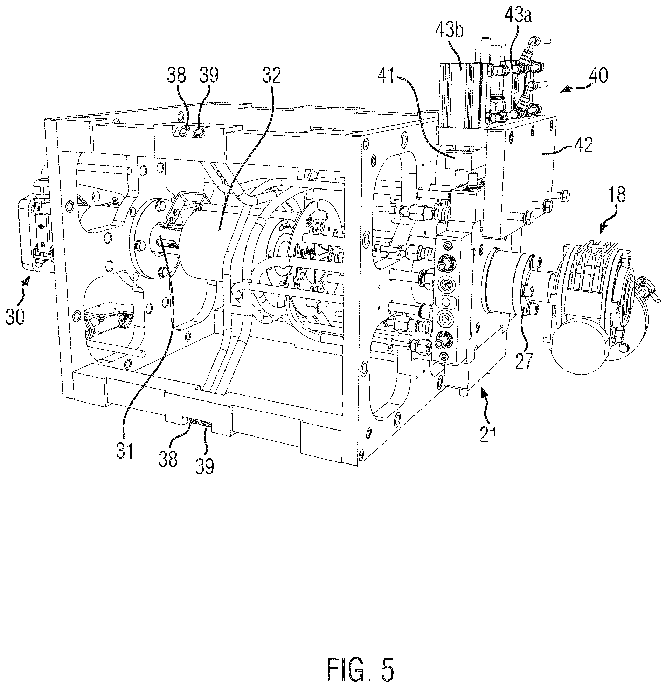

Figure 5 shows the tool drum 10 without tools being mounted thereat onto the frame 19. Figure 5 shows that the frame 19 provides a gas connector 38 and a vacuum connector 39 for each of the tool parts 12 to 15 for establishing a gas and vacuum connection with the corresponding tool parts 12 to 15 when they are mounted onto the frame 19.

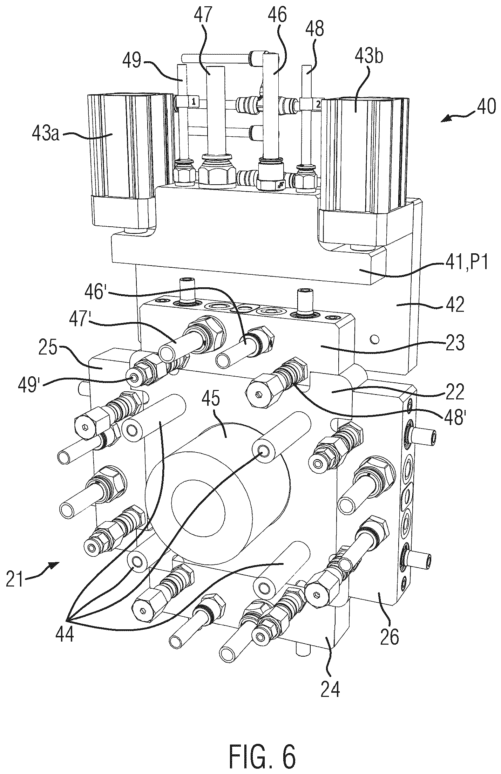

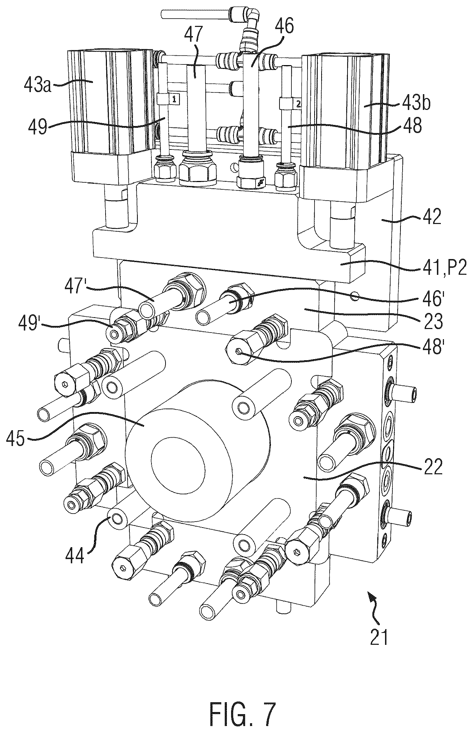

Figure 5 shows the fluid manifold 21 being mounted to the drive shaft 27 of the drum drive 18, such that the fluid manifold is distanced from the frame 19 in order to be easily connectable with the fluid supply unit 40 outside the frame 19. The fluid supply unit 40 comprises a fluid connector 41, which is movable transversely to the rotation axis 11 between an open position P1 (see figure 6), where the fluid supply unit 40 is disconnected from the fluid manifold 21, and a closed position P2 (see figure 7), where the fluid supply unit 40 is connected to the fluid manifold 21. The fluid supply unit 40 comprises a stationary base 42. The stationary base 42 carries two linear drives 43a, 43b for moving the fluid connector 41 between the open position P1 and the closed position P2. In figure 5, the fluid connector 41 is located in the open position P1, thus enabling rotation of the tool drum 10.

Figure 6 shows the fluid manifold 21 together with the fluid supply unit 40 in isolation. The mounting plate 22 comprises several mounting jackets 44, which are protruding from the mounting plate 22 to be mounted at the outer face 20 of the frame 19, such that the fluid manifold 21 is held at a predetermined distance to the frame 19. This makes it possible that the fluid manifold 21 can be connected with the fluid supply unit 40 next to the frame 19. Further, figure 6 shows a central support 45 extending from the mounting plate 22, which provides an abutment against the frame 19 in order to improve a robust connection between the manifold 21 and the frame 19.

Figure 6 shows that the fluid supply unit 40 comprises a gas supply 46, a vacuum supply 47 as well as a first compressed air supply 48 and a second compressed air supply 49. Each of the first block 23, second block 24, third block 25 and fourth block 26 of the fluid manifold 21 comprises corresponding gas line 46', a vacuum line 47' as well as a first compressed air line 48' and a second compressed air line 49' which can be brought into connection with the fluid supply connector 41 to connect with the corresponding gas supply 46, vacuum supply 47, as well as first and second compressed air supply 48, 49.

Figure 7 shows the fluid connector 41 being moved by the linear drives 43a, 43b into the closed position P2, where it connects with the first block 23 to establish a fluid connection between the fluid supply unit 40 and the first tool part 12 through the fluid manifold 21 (see figure 3).

## Claims

1. Packaging machine (1) with a sealing station (4) which comprises a tool drum (10), being mounted rotatable about a rotation axis (11), the tool drum (10) comprises a frame (19), at least a first tool part (12) and a second tool part (13), wherein the first tool part (12) and the second tool part (13) are mounted onto the frame (19), and a fluid manifold (21), wherein the sealing station (4) comprises a fluid supply unit (40), which is connectable with the fluid manifold (21), wherein the tool drum (10) is rotatable about the rotation axis (11) into a first orientation angle such that the fluid manifold (21) is connectable to the fluid supply unit (40) for distributing fluid to the first tool part (12), **characterized in that** the tool drum (10) is rotatable about the rotation axis (11) into a second orientation angle such that the fluid manifold (21) is connectable to the fluid supply unit (40) for distributing fluid to the second tool part (13).

2. Packaging machine according to claim 1, **characterized in that** the fluid manifold (21) is mounted at an outer face of the frame (19).

3. Packaging machine according to claim 1 or claim 2, **characterized in that** the fluid manifold (21) is provided as a unit being separated from the first tool part (12) and the second tool part (13).

4. Packaging machine according to one of the preceding claims, **characterized in that** the fluid manifold (21) is connected to a drive shaft (27).

5. Packaging machine according to one of the preceding claims, **characterized in that** the fluid manifold (21) comprises a mounting plate (22) which is mounted to the frame (19) in a rotation fixed manner.

6. Packaging machine according to claim 5, **characterized in that** the mounting plate (22) carries at least a first block (23) for distributing fluid to the first tool part (12) and a second block (24) for distributing fluid to the second tool part(13).

7. Packaging machine according to one of the preceding claims, **characterized in that** the fluid manifold (21) is configured to distribute compressed air, a vacuum and/or a predetermined gas to at least the first tool part (12) and the second tool part (13) for a sealing process.

8. Packaging machine according to one of the preceding claims, **characterized in that** the fluid supply unit (40) comprises a fluid connector (41), which is movable transversely to the rotation axis (11) between an open position (P1), where the fluid supply unit (40) is disconnected from the fluid manifold (21), and a closed position (P2), where the fluid supply unit (40) is connected to the fluid manifold (21).

9. Packaging machine according to claim 8, **characterized in that** the fluid supply unit (40) comprises a stationary base (42) with at least two linear drives (43a, 43b) for moving the fluid connector (41) between the open position (P1) and the closed position (P2).

10. Packaging machine according to one of the preceding claims, **characterized in that** the rotation axis (11) is a horizontal rotation axis.

11. Packaging machine according to one of the preceding claims, **characterized in that** the sealing station (4) comprises at least one servomotor (50) for rotating the tool drum (10), in particular at least one servomotor being configured for rotating the tool drum bidirectional.

12. Packaging machine according to one of the preceding claims, **characterized in that** the tool drum (10) comprises a current supply unit (30) with a central current supply (31) and an thereto connected electrical manifold (32) for distributing the current to the first tool part (12) and the second tool part (13), the electrical manifold (32) being located inside the frame (19) of the tool drum (10), and with a quick connector assembly (33) for the first tool part (12) and the second tool part (13) being located outside the frame (19).

13. Packaging machine according to one of the preceding claims, **characterized in that** the packaging machine (1) comprises at least one first RFID system (51a) based on which rotation of the tool drum (10) is controlled.

14. Packaging machine according to one of the preceding claims, **characterized in that** the packaging machine (1) is a tray sealer (2), wherein the sealing station (4) comprises at least one lower tool part (3) which is identifiable by a second RFID system (51b).

15. Method for rotating a tool drum (10) about a rotation axis (11) between a first orientation angle (α) and a second orientation angle (β), wherein in the first orientation angle (α) a fluid manifold (21) of the tool drum (10) is used for distributing fluid to a first tool part (12) being mounted on the tool drum (10), **characterized in that** in the second orientation angle (β) the fluid manifold (21) is used for distributing fluid to a second tool part (13) being mounted on the tool drum (10).
